# FASCICULE DE BREVET EUROPEEN

(11) **EP 4 136 746 B1**
(45) Date de publication et mention de la délivrance du brevet: **23.07.2025**
(21) Numéro de dépôt: 21723886.4
(22) Date de dépôt: 08.04.2021
(51) Int. Cl.: H02P 5/60, H02P 27/06, B64D 27/02, B60L 50/51, B60L 50/60, B64D 27/357, B64D 35/023, B64D 35/04, B60L 15/38, B60L 50/15, B60L 50/16, B64D 27/33

(54) **CANAL DE PROPULSION POUR AÉRONEF**
ANTRIEBSKANAL FÜR FLUGZEUG
PROPULSION CHANNEL FOR AIRCRAFT

(30) Priorité: 15.04.2020 FR 2003777
(43) Date de publication de la demande: 22.02.2023
(73) Titulaire: SAFRAN, 75015 Paris (FR)
(72) Inventeur: VIGUIER, Christophe Ludovic Jean-Claude, 77550 MOISSY-CRAMAYEL (FR); PETIBON, Stéphane, 77550 MOISSY-CRAMAYEL (FR); ROUGIER, Florent, 77550 MOISSY-CRAMAYEL (FR)
(74) Mandataire: Casalonga
(86) Numéro de dépôt international: PCT/FR2021/050621
(87) Numéro de publication internationale: WO 2021/209701

(56) Documents cités:
- EP-A1- 3 103 671
- EP-A1- 3 240 183
- EP-A1- 3 296 212
- EP-A1- 3 397 555
- EP-A1- 3 494 046
- EP-B1- 3 296 212
- KHATOUNIAN F ET AL: "Control of a doubly fed induction generator for aircraft application", THE 29TH ANNUAL CONFERENCE OF THE IEEE INDUSTRIAL ELECTRONICS SOCIETY, 2003. IECON '03, IEEE SERVICE CENTER, PISCATAWAY, NJ, vol. 3, 2 November 2003 (2003-11-02), pages 2711 - 2716, XP010691573, ISBN: 978-0-7803-7906-0, DOI: 10.1109/IECON.2003.1280676
- DAVID J. SADEY ET AL: "Proposal and Development of a High Voltage Variable Frequency Alternating Current Power System for Hybrid Electric Aircraft", 14TH INTERNATIONAL ENERGY CONVERSION ENGINEERING CONFERENCE, 25 July 2016 (2016-07-25), Reston, Virginia, XP055750143, ISBN: 978-1-62410-407-7, DOI: 10.2514/6.2016-4928
- ZHANG XIAOLONG ET AL: "Large electric machines for aircraft electric propulsion", IET ELECTRIC POWER APPLICATIONS, IET, UK, vol. 12, no. 6, 1 July 2018 (2018-07-01), pages 767 - 779, XP006079409, ISSN: 1751-8660, DOI: 10.1049/IET-EPA.2017.0639

## Description

### Domaine technique de l'invention

L'invention concerne les systèmes de propulsion d'aéronef, et plus particulièrement un canal de propulsion hybride pour aéronef et concerne plus particulièrement l'électrification de la propulsion qui vise à assurer tout ou partie de la propulsion par des propulseurs électriques afin de diminuer les émissions produites et les pollutions sonores.

Dans un aéronef à propulsion hybride, le canal de propulsion inclut une turbomachine, qui constitue une source de puissance mécanique, une génératrice électrique couplée mécaniquement à la turbomachine et délivrant une tension alternative, et un moteur électrique relié électriquement à la génératrice électrique et couplé mécaniquement à un propulseur, par exemple une hélice, générant une poussée.

### Etat de la technique antérieur

EP 3 296 212 A1 divulgue un système de propulsion d'aéronef comprenant une turbine à gaz, deux générateurs électriques asynchrones de courant alternatif reliés à ladite turbine, et des moteurs électriques alternatifs synchrones. KHATOUNIAN F ET AL: "Control of a doubly fed induction generator for aircraft application", THE 29TH ANNUAL CONFERENCE OF THE IEEE INDUSTRIAL ELECTRONICS SOCIETY, 2003. IECON '03, IEEE SERVICE CENTER, PISCATAWAY, NJ, vol. 3, 2 novembre 2003 (2003-11-02), pages 2711-2716 divulgue une machine électrique synchrone à aimants permanents (PMSM) reliée à un premier convertisseur AC/DC, un deuxième convertisseur de puissance DC/AC relié au premier convertisseur AC/DC en configuration « back to back », et un générateur asynchrone à double alimentation (DFIG). EP 3 494 046 A1 divulgue un système de propulsion pour aéronef comprenant des hélices entraînées par des moteurs électriques. EP 3 397 555 A1 divulgue un système de propulsion pour un aéronef hybride comprenant une turbine, un générateur relié mécaniquement à la turbine, un redresseur relié au générateur, une batterie et un onduleur reliés au redresseur, et un moteur relié à l'onduleur. Généralement, les aéronefs sont propulsés par des turbomachines du type turbopropulseur, turboréacteur ou turbine.

Cependant, l'utilisation de turbomachines s'accompagne d'émissions de bruit importantes et d'une consommation élevée de combustible fossile, notamment de kérosène, engendrant des émissions polluantes également importantes.

Afin de réduire les émissions de polluant et de bruit, la propulsion des aéronefs peut être hybridée, notamment en couplant des turbomachines avec des moteurs électriques entraînant des hélices de propulsion, pour diminuer les émissions de polluant et de bruit pendant certaines phases, notamment des phases de roulage des aéronefs.

Lesdits aéronefs comportent classiquement au moins un canal de propulsion comportant généralement une génératrice électrique et une machine électrique de propulsion alimentée par la génératrice, la machine électrique de propulsion entraînant une hélice de propulsion.

La génératrice électrique est entraînée généralement par une turbomachine.

On pourra se référer au document US2016/0365810 qui divulgue un canal de propulsion synchrone comprenant une génératrice électrique synchrone à aimant permanent entraînée par une turbine à gaz, la génératrice alimentant directement un moteur électrique synchrone à aimant permanent relié à une hélice pour propulser l'aéronef.

Cependant, comme la génératrice est reliée directement au moteur, et est en prise directe avec la turbine à gaz, la variation de vitesse du moteur électrique de propulsion est imposée par le régime de la turbine à gaz.

Le document US2017/0170763 divulgue également un canal de propulsion synchrone qui comprend une génératrice électrique synchrone à contrôle de flux rotorique entraînée par une turbine à gaz, la génératrice alimentant directement un moteur électrique synchrone à aimant permanent relié à une hélice pour propulser l'aéronef.

La variation de vitesse du moteur électrique de propulsion est également imposée par le régime de la turbine à gaz.

En outre, l'utilisation d'un canal de propulsion synchrone requiert, pour fonctionner, une synchronisation et un accrochage du moteur avec la génératrice synchrone, ce qui nécessite des systèmes de contrôle dont la mise en œuvre est complexe.

De plus, comme la génératrice électrique synchrone n'est pas magnétisée par un circuit de commande, tant qu'elle est entraînée, même en cas de défaut, elle produit une puissance électrique pouvant détériorer voire détruire l'aéronef.

Le document NASA-20170000886 divulgue un canal de propulsion asynchrone comprenant une génératrice asynchrone à double alimentation (« DFIG : Doubly-Fed Induction Generator », en anglais) entrainée par une turbomachine et alimentant directement un moteur asynchrone à double alimentation (« DFIM : Doubly-Fed Induction Motor » en anglais) entraînant une hélice de propulsion.

Le canal de propulsion asynchrone permet de faire varier la vitesse de rotation de l'hélice indépendamment du régime de la turbomachine. Cependant, il requiert la mise en œuvre de plusieurs circuits de commande de puissance pour la magnétisation et le contrôle de la génératrice et du moteur asynchrone à double alimentation, augmentant la masse globale du canal de propulsion et nécessitant une communication entre les circuits de commande pour réguler des points de fonctionnement performants.

En outre, l'utilisation d'une génératrice et d'un moteur asynchrones et de leur circuit de commande dégrade fortement le rendement énergétique global du canal de propulsion.

Le but de l'invention est de pallier tout ou partie de ces inconvénients.

### Exposé de l'invention

L'invention est définie par la revendication indépendante jointe. Au vu de ce qui précède, l'invention a pour objet un canal de propulsion pour aéronef comprenant
- au moins une première machine électrique tournante asynchrone polyphasée à double alimentation destinée à être couplée mécaniquement à une turbomachine,
- au moins une deuxième machine électrique tournante polyphasée couplée électriquement à la première machine électrique tournante asynchrone, et
- un module de pilotage et de stockage configuré pour piloter la première machine électrique tournante asynchrone polyphasée
ledit module étant relié d'une part à la première machine électrique tournante asynchrone polyphasée à double alimentation et, d'autre part, à ladite au moins .
deuxième machine électrique tournante polyphasée, ladite au moins deuxième machine électrique tournante polyphasée comprenant une machine électrique tournante synchrone polyphasée à aimant permanent.

L'utilisation de la machine électrique tournante synchrone permet de minimiser la masse embarquée dans l'aéronef en supprimant le circuit de commande de puissance dédié à la commande de la machine synchrone, et permet d'augmenter l'efficacité énergétique du canal de propulsion.

Selon une caractéristique, la machine électrique tournante asynchrone polyphasée à double alimentation est du type sans balai.

Selon une autre caractéristique, le canal de propulsion comprend en outre un interrupteur relié entre ladite au moins deuxième machine électrique et un point de connexion reliant ladite première machine électrique tournante et le module, le module de pilotage et de stockage étant en outre configuré pour piloter la première machine électrique tournante synchrone.

De préférence, le module de pilotage et de stockage comprend un premier convertisseur de puissance électrique réversible configuré pour piloter ladite première machine électrique tournante asynchrone, un deuxième convertisseur de puissance électrique réversible relié au premier convertisseur de puissance et au point de connexion, le deuxième convertisseur réversible étant configuré pour alimenter la première machine électrique tournante asynchrone et la machine synchrone, ledit module comprenant en outre une unité de stockage d'énergie électrique reliée entre le premier convertisseur de puissance électrique et le deuxième convertisseur de puissance électrique, le module étant en outre configuré pour stocker de l'énergie électrique dans l'unité de stockage.

Selon encore une autre caractéristique, les premier et deuxième convertisseurs de puissance électrique réversible sont configurés pour transférer 30% de la puissance nominale générée par la machine électrique tournante asynchrone polyphasée à double alimentation.

Avantageusement, le deuxième convertisseur de puissance électrique réversible est en outre configuré pour transférer une puissance électrique générée par la machine électrique tournante synchrone polyphasée à aimant permanent vers l'unité de stockage.

Selon une autre caractéristique, le canal de propulsion comprend en outre une deuxième machine électrique tournante synchrone à aimant permanent reliée mécaniquement entre la turbomachine et la première machine électrique tournante asynchrone polyphasée à double alimentation, le module de pilotage et de stockage comprenant en outre un troisième convertisseur de puissance électrique relié à la deuxième machine électrique tournante synchrone et à l'unité de stockage d'énergie électrique, le troisième convertisseur de puissance électrique étant configuré pour transférer une puissance électrique générée par la deuxième machine électrique synchrone vers l'unité de stockage et le premier convertisseur de puissance.

Avantageusement, le canal de propulsion comprend en outre une troisième machine électrique tournante synchrone polyphasée à aimant permanent et un quatrième convertisseur de puissance électrique réversible relié à ladite troisième machine électrique tournante synchrone et relié entre le premier convertisseur de puissance électrique et le deuxième convertisseur de puissance électrique.

Il est également proposé un aéronef comprenant un canal de propulsion tel que défini précédemment, et une turbomachine configurée pour entraîner la première machine électrique tournante asynchrone polyphasée.

De préférence, l'aéronef comprend en outre un deuxième canal de propulsion d'architecture identique au canal de propulsion, la turbomachine étant configurée pour entrainer les canaux de propulsion.

### Brève description des dessins

D'autres buts, caractéristiques et avantages de l'invention apparaîtront à la lecture de la description suivante, donnée uniquement à titre d'exemple non limitatif, et faite en référence aux dessins annexés sur lesquels :
[Fig 1]
   est une vue schématique d'un aéronef comprenant un canal de propulsion conforme à l'invention ;
[Fig 2]
   illustre un deuxième mode de réalisation d'un canal de propulsion selon l'invention ;
[Fig 3]
   illustre un mode de réalisation d'un module de pilotage et de stockage ;
[Fig 4]
   illustre un troisième mode de réalisation du canal de propulsion ;
[Fig 5]
   illustre un quatrième mode de réalisation du canal de propulsion ;
[Fig 6]
   illustre un mode de réalisation d'un système de propulsion d'aéronef à deux canaux de propulsion ; et
[Fig 7]
   illustre un exemple de démarrage du canal de propulsion.

### Exposé détaillé d'au moins un mode de réalisation

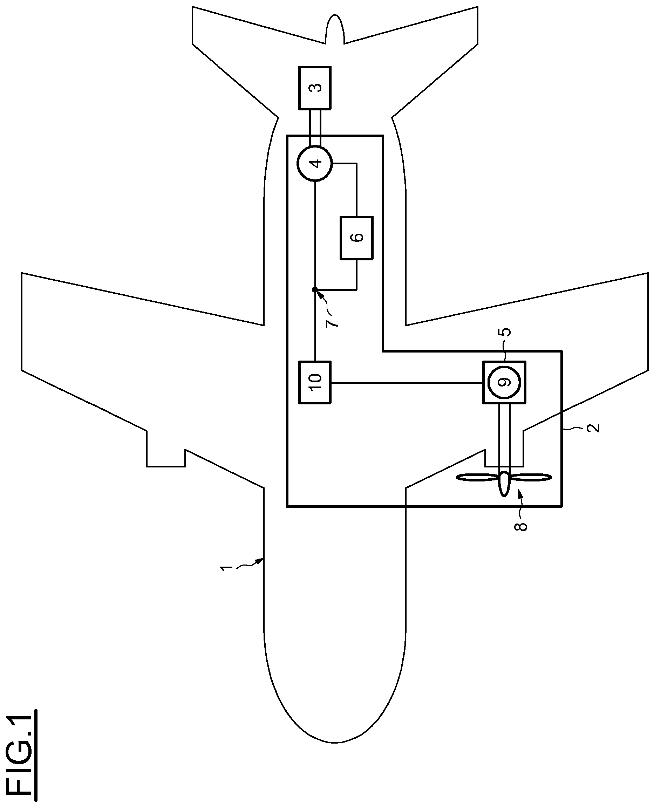

On se réfère à la figure 1 qui illustre schématiquement un aéronef 1 comprenant un premier mode de réalisation d'un canal de propulsion 2 conforme à l'invention. L'aéronef comprend en outre une turbomachine 3, par exemple du type turbopropulseur, turboréacteur ou turbine, entraînant le canal de propulsion pour propulser l'aéronef.

L'aéronef 1 peut être du type à voilure tournante à décollage vertical (« VTOL : vertical take off and landing » en anglais), à voilure fixe et à décollage/atterrissage court (« STOL : short take off and landing » en anglais) ou du type à voilure fixe et à décollage/atterrissage conventionnel (« CTOL : conventional take off and landing » en anglais).

Dans l'exemple illustré, l'aéronef 1 comporte un unique canal de propulsion 2 servant à propulser l'aéronef 1 et comprenant des machines électriques tournantes destinées à générer une puissance électrique et à propulser l'aéronef 1 à partir de la puissance électrique produite.

En variante, l'aéronef peut comprendre plusieurs canaux de propulsion pour propulser l'aéronef 1.

Le canal de propulsion 2 comprend une première et une deuxième machine électrique tournante 4 et 5. La première machine électrique tournante 4 est une machine électrique asynchrone polyphasée à double alimentation couplée mécaniquement à la turbomachine 3, et la deuxième machine électrique tournante 5 est une machine électrique polyphasée couplée électriquement à la première machine électrique tournante asynchrone 4 et elle comporte un arbre couplé à une hélice 8 de propulsion.

Le canal de propulsion 2 comporte en outre un module 6 de pilotage et de stockage pilotant la machine électrique tournante asynchrone polyphasée et stockant de l'énergie électrique.

La première machine électrique tournante 4 peut être du type sans balais (« brushless » en anglais) comprenant un rotor bobiné ou à cage d'écureuil.

Le stator de la première machine électrique tournante asynchrone 4 comprend un premier bobinage statorique générant la puissance électrique alimentant la deuxième machine électrique tournante 5 et un deuxième bobinage statorique distinct relié au module 6 pour magnétiser et piloter le flux magnétique du rotor de manière à contrôler la fréquence et l'amplitude du signal de puissance électrique issu des machines électriques.

Le module de pilotage et de stockage 6 est relié d'une part à la première machine électrique tournante asynchrone 4 et, d'autre part, à un point de connexion 7 situé entre la première machine électrique 4 et la deuxième machine électrique tournante 5 polyphasée.

Le module 6 comprend des convertisseurs de puissance et son architecture sera détaillée dans ce qui suit.

La deuxième machine électrique tournante 5 comprend une première machine électrique tournante synchrone 9 polyphasée à aimant permanent.

En variante, plusieurs machines électriques tournantes synchrones 9 polyphasées à aimant permanent peuvent être reliées au point de connexion 7 de manière à être alimentées par la première machine électrique tournante asynchrone 4, chaque machine électrique tournante synchrone 9 étant couplée à une hélice 8 qui lui est propre.

Le premier canal 2 peut comprendre en outre un interrupteur 10 reliant la première machine électrique tournante synchrone 9 au point de connexion 7.

Lorsque l'interrupteur 10 est ouvert, le module 6 pilote et alimente la première machine 4 pour notamment démarrer la turbomachine 3.

Le pilotage du flux rotorique de la première machine électrique tournante asynchrone 4 par l'intermédiaire du module de pilotage et de stockage 6 permet de faire varier la fréquence et l'amplitude du signal de puissance électrique alimentant la première machine électrique tournante synchrone 9 de manière à contrôler la poussée générée par l'hélice 8 indépendamment du régime de la turbomachine 3.

Le module 6 pilote par exemple le flux rotorique de la première machine électrique tournante asynchrone 4 de sorte que la variation de la fréquence du signal de puissance se situe dans une plage de variation de par exemple plus au moins 30% centrée sur le point nominal de performance de la première machine électrique tournante asynchrone 4. Les convertisseurs de puissance sont dimensionnés pour transférer 30% de la puissance nominale, réduisant ainsi leurs masses.

Un tel type de pilotage permet notamment de faire fonctionner la première machine asynchrone 4 à son point de fonctionnement optimal selon notamment le régime de la turbomachine 3, et notamment de faire varier la vitesse de rotation de la première machine synchrone 9.

L'utilisation de la première machine électrique tournante synchrone 9 permet de minimiser la masse embarquée dans l'aéronef en supprimant le circuit de commande de puissance dédié à la commande de la première machine synchrone 9, et permet d'augmenter l'efficacité énergétique du canal de propulsion 2.

La poussée de l'hélice 8 peut être contrôlée dans la plage de variation.

En outre, pour générer la puissance électrique, la première machine asynchrone 4 nécessite d'être magnétisée par le module 6. Par conséquent, il est possible de contrôler la désexcitation de ladite machine et de gérer les modes de défauts du premier canal 2 pour limiter la propagation de défauts de manière à empêcher la détérioration de l'aéronef 1.

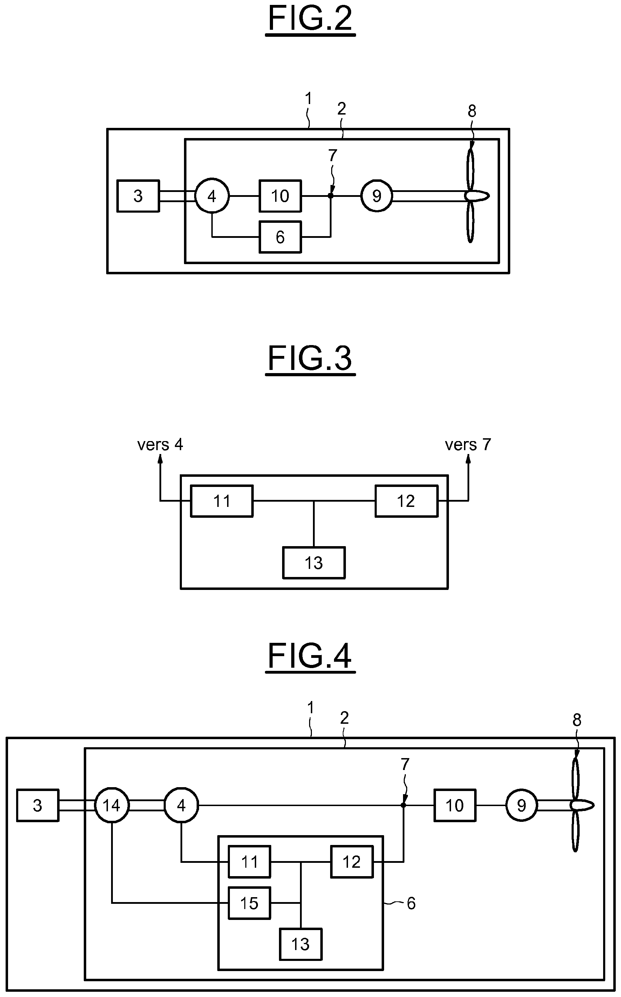

La figure 2 illustre un deuxième mode de réalisation d'un canal de propulsion 2 conforme à l'invention. Sur cette figure, des éléments identiques à ceux de la figure 1 sont désignés par la même référence numérique.

Ce mode de réalisation diffère du premier mode de réalisation illustré à la figure 1 en ce que l'interrupteur 10 est disposé entre la première machine asynchrone 4 et le point de connexion 7.

L'interrupteur 10 permet de déconnecter la première machine électrique tournante synchrone 9 de la première machine asynchrone 4 de sorte que la première machine électrique tournante synchrone 9 soit alimentée par le module 6, permettant par exemple un roulage de l'aéronef 1 sans émission de gaz de combustion et sans émission de bruit.

La figure 3 illustre un exemple de mode de réalisation du module de pilotage et de stockage 6.

Le module de stockage 6 comprend un premier convertisseur 11 de puissance électrique réversible, un deuxième convertisseur 12 de puissance électrique réversible relié au premier convertisseur 11 et au point de connexion 7 et une unité de stockage 13 d'énergie électrique reliée entre le premier convertisseur 11 et le deuxième convertisseur 12.

Le premier convertisseur 11 alimente le deuxième bobinage de la première machine électrique tournante asynchrone 4 et est du type onduleur (« inverter » en anglais) réalisé par exemple à partir de transistors de puissance.

Le deuxième convertisseur 12 alimente le premier bobinage de la première machine électrique tournante asynchrone 4 ou la première machine synchrone 9, et est du type onduleur réalisé par exemple à partir de transistors de puissance.

L'unité de stockage 13 est par exemple du type batterie ou supercondensateur.

On se réfère à la figure 4 qui illustre un troisième mode de réalisation du canal de propulsion 2.

Ce mode de réalisation diffère des modes de réalisation illustrés aux figures 1 à 3 en ce que le canal de propulsion 2 comprend en outre une deuxième machine électrique tournante synchrone 14 à aimant permanent reliée mécaniquement entre la turbomachine 3 et la première machine électrique tournante asynchrone 4, et un troisième convertisseur 15 de puissance électrique relié à la deuxième machine électrique tournante synchrone 14 et à l'unité de stockage 13.

Le troisième convertisseur 15 transfère par exemple une puissance électrique générée par la deuxième machine électrique synchrone 14 vers l'unité de stockage 13 et le premier convertisseur 11.

La deuxième machine électrique tournante synchrone 14 génère une puissance électrique supplémentaire servant à la magnétisation de la première machine 4 par l'intermédiaire du premier convertisseur 11, ou à la recharge de l'unité de stockage 13.

Cette puissance électrique peut également, en variante, alimenter des circuits de distribution de puissance de l'aéronef 1.

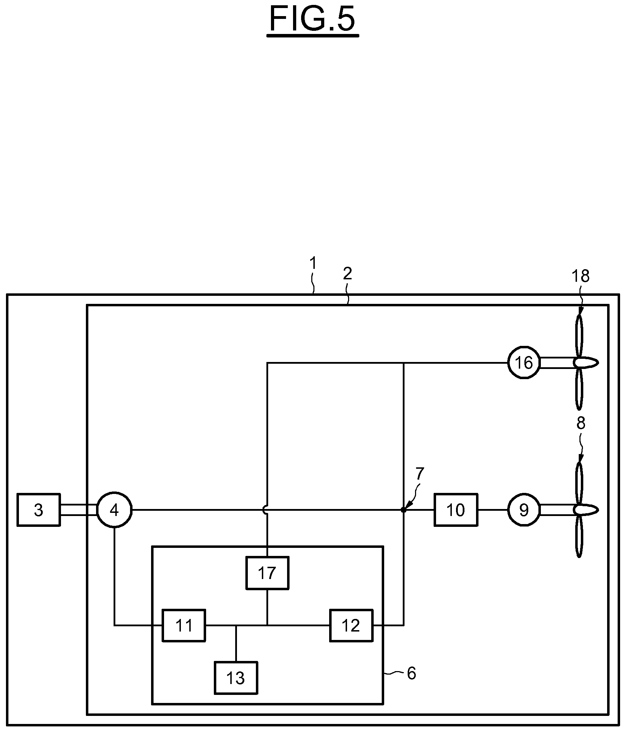

La figure 5 illustre un quatrième mode de réalisation du canal de propulsion 2.

Ce mode de réalisation diffère du mode de réalisation illustré à la figure 2 en ce que le canal 2 comprend en outre une troisième machine électrique tournante synchrone 16 polyphasée à aimant permanent et un quatrième convertisseur 17 de puissance électrique réversible relié à la troisième machine électrique tournante synchrone 16, et relié entre le premier convertisseur 11 et le deuxième convertisseur 12.

La troisième machine électrique synchrone 16 comprend un arbre couplé à une deuxième hélice 18

Le quatrième convertisseur 17 est d'architecture identique au deuxième convertisseur 12.

La première machine électrique synchrone 9 et la troisième machine électrique synchrone 16 sont pilotables indépendamment l'une de l'autre autorisant un démarrage séquentiel des deux machines 9 et 16 pour notamment réduire les pics d'appel de puissance électrique lors de phases de démarrage des machines synchrones 9 et 16.

En outre, un tel agencement des première et deuxième machines électriques synchrones permet de créer un différentiel de vitesse, par conséquent de poussée, pour contribuer au contrôle d'altitude de l'aéronef 1 si par exemple les première et deuxième machines électriques sont placées respectivement de part et d'autre de l'axe longitudinal de symétrie de l'aéronef 1.

En variante, le canal 2 peut comprendre plus de deux machines électriques synchrones à aimant permanent reliées chacune au module 6 par l'intermédiaire d'un convertisseur de puissance réversible.

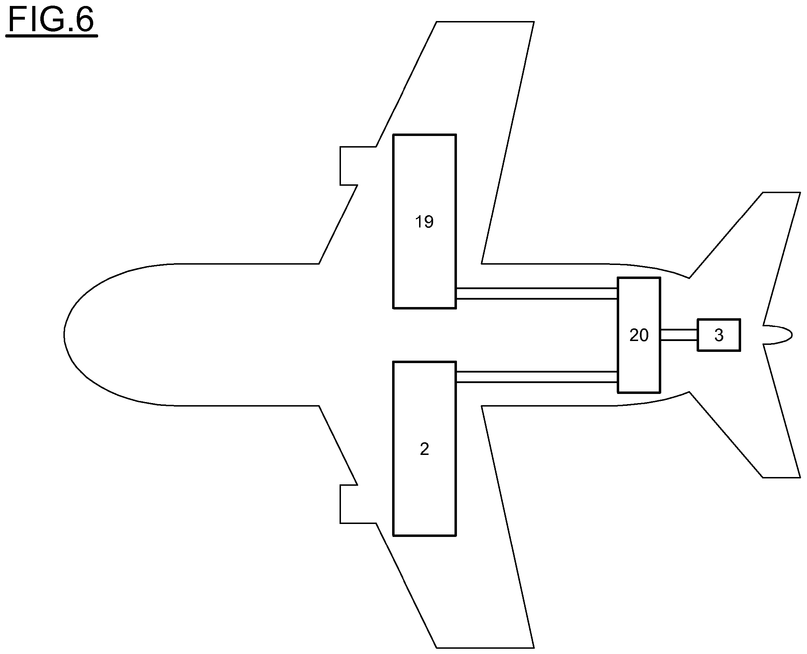

La figure 6 illustre un autre mode de mise en œuvre d'un système de propulsion d'un aéronef, comprenant, outre la turbomachine 3, le premier canal de propulsion 2 décrit précédemment, un deuxième canal de propulsion 19 d'architecture identique au premier canal de propulsion 2, et un système de transfert de puissance mécanique 20.

Les deux canaux de propulsion 2, 19 sont entraînés par la turbomachine 3 par l'intermédiaire du système de transfert de puissance mécanique 20.

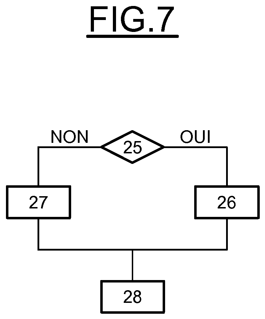

La figure 7 illustre un exemple de mise en œuvre d'une phase de démarrage du canal de propulsion 2.

Si la turbomachine 3 est éteinte (étape 25), le premier convertisseur 11 alimente le deuxième bobinage de la première machine électrique tournante asynchrone 4 à partir de l'unité de stockage 13, et le deuxième convertisseur 12 alimente le premier ensemble de bobinage de la première machine électrique tournante asynchrone 4 à partir de l'unité de stockage 13 (étape 27). La première machine électrique tournante asynchrone 4 est pilotée en mode moteur.

La première machine asynchrone 4 entraîne mécaniquement la turbomachine 3 jusqu'à sa mise en route et son fonctionnement de manière autonome.

Lorsque la turbomachine 3 fonctionne de manière autonome, la première machine électrique tournante asynchrone 4 est pilotée en mode générateur.

En variante, la génératrice asynchrone 4 peut être désexcitée et découplée de toute alimentation électrique pour ne pas générer de puissance sur le canal de propulsion.

Si la turbomachine 3 fonctionne (étape 25), le premier convertisseur 11 alimente le deuxième bobinage de la première machine électrique tournante asynchrone 4 à partir de l'unité de stockage 13 (étape 26), et le deuxième convertisseur 12 alimente le premier ensemble de bobinage. La première machine électrique tournante asynchrone 4 est pilotée en mode générateur.

Lorsque la première machine électrique tournante asynchrone 4 génère une puissance électrique, le procédé de démarrage se poursuit par l'étape 28.

Lors de l'étape 28 suivante, l'interrupteur 10 disposé entre la première machine électrique tournante synchrone 9 et le point de connexion 7 (figures 1 et 4) est fermé. Le premier convertisseur 11 pilote le deuxième bobinage de la première machine électrique tournante asynchrone 4 et le deuxième convertisseur 12 alimente le premier ensemble de bobinage de manière à assurer une synchronisation et un accrochage de la première machine électrique synchrone 9 lors du démarrage de la première machine électrique synchrone 9 en régulant l'amplitude et la fréquence de la tension polyphasée générée.

Si le canal de propulsion 2 comprend plusieurs machines électriques synchrones, chaque convertisseur relié à une machine électrique synchrone est piloté pour assurer une synchronisation et un accrochage de ladite machine électrique synchrone lors du démarrage de ladite machine électrique synchrone en régulant l'amplitude et la fréquence de la tension polyphasée générée.

Le premier convertisseur 11 et le deuxième convertisseur 12 pilotent la première machine électrique tournante asynchrone 4 de sorte que, par exemple, la machine 4 génère le signal de puissance sous forme d'une rampe favorisant la synchronisation et un accrochage de la première machine électrique synchrone 9.

Lorsque l'interrupteur 10 est disposé entre la première machine asynchrone 4 et le point de connexion 7 (figures 2 et 5), lors de l'étape 28, l'interrupteur 10 est ouvert. Le deuxième convertisseur 12 alimente la première machine électrique synchrone 9 à partir de l'unité de stockage 13 et le premier convertisseur 11 pilote le deuxième bobinage de la première machine électrique tournante asynchrone 4 de manière à synchroniser l'amplitude et la fréquence du signal de puissance avec la tension délivrée par le deuxième convertisseur 12.

Puis l'interrupteur 10 est fermé, le premier convertisseur 11 pilotant le deuxième bobinage de la première machine électrique tournante asynchrone 4 de manière à accrocher la première machine électrique tournante synchrone 9 avec la génératrice électrique tournante asynchrone 4.

Le roulage de l'aéronef 1, en propulsion électrique, s'effectue en ouvrant l'interrupteur 10 lorsque l'interrupteur est disposé entre la première machine asynchrone 4 et le point de connexion 7 (figures 2 et 5) ou en fermant l'interrupteur 10 lorsque l'interrupteur est disposé entre le point de connexion 7 et la première machine électrique tournante synchrone 9 (figures 1 et 4).

Le deuxième convertisseur 12 alimente alors la première machine électrique synchrone 9 à partir de l'unité de stockage 13, le premier convertisseur 11 n'étant pas actif.

La vitesse de l'aéronef 1 au sol peut être régulée en faisant varier la fréquence du signal d'alimentation délivré par le convertisseur 12.

Le roulage de l'aéronef s'effectue ainsi en propulsion électrique de sorte que les émissions de gaz de combustion sont supprimées et les émissions de bruit sont réduites.

Lorsque l'aéronef 1 est en phase de vol stabilisé (par exemple décollage, croisière), la variation de la vitesse de rotation de la première machine électrique synchrone 9 permet de réguler la poussée de l'hélice 8 indépendamment de la vitesse de rotation de la turbomachine 3 par le biais du contrôle de la fréquence générée par la machine électrique tournante asynchrone 4.

La turbomachine peut ainsi fonctionnée à son point de fonctionnement optimal, et son rendement peut être amélioré.

En outre la décorrélation entre la vitesse de rotation de la turbomachine 3 et de l'hélice 8 permet de faire fonctionner la turbomachine 3 à haut régime et ainsi d'augmenter son rendement.

Lorsque l'aéronef 1 est en phase de vol transitoire, par exemple lors de changements d'altitude, la variation de poussée peut être générée par le contrôle de la première machine asynchrone 4 indépendamment du régime de la turbomachine 3.

En outre, si l'hélice 8 n'est pas utilisée pour produire de la poussée, l'autorotation libre due à l'avance de l'aéronef 1 permet d'entraîner la première machine électrique synchrone 9 en rotation.

La première machine électrique synchrone 9 fonctionne donc en mode génératrice pour par exemple alimenter des circuits de distribution de puissance de l'aéronef 1 ou pour recharger l'unité de stockage 13 par l'intermédiaire du deuxième convertisseur 12.

## Revendications

1. Canal de propulsion (2, 19) pour aéronef (1) comprenant :
- au moins une première machine électrique tournante asynchrone (4) polyphasée à double alimentation destinée à être couplée mécaniquement à une turbomachine (3),
- au moins une deuxième machine électrique tournante (5) polyphasée couplée électriquement à la première machine électrique tournante asynchrone, et
- un module (6) de pilotage et de stockage configuré pour piloter la première machine électrique tournante asynchrone (4) polyphasée à double alimentation,
ledit module étant relié d'une part à la première machine électrique tournante asynchrone polyphasée à double alimentation et, d'autre part, à ladite au moins deuxième machine électrique tournante polyphasée, ladite au moins deuxième machine électrique tournante polyphasée comprenant une machine électrique tournante synchrone (9) polyphasée à aimant permanent, **caractérisé en ce qu'**un stator de la première machine électrique tournante asynchrone polyphasée à double alimentation comprend un premier bobinage statorique générant la puissance électrique alimentant la deuxième machine électrique tournante (5) polyphasée et un deuxième bobinage statorique distinct relié au module (6) de pilotage et de stockage pour magnétiser et piloter le flux magnétique d'un rotor de la première machine électrique tournante asynchrone polyphasée à double alimentation de manière à contrôler la fréquence et l'amplitude du signal de puissance électrique issu de la première machine électrique tournante.

2. Canal selon la revendication 1, dans lequel la machine électrique tournante asynchrone (4) polyphasée à double alimentation est du type sans balai.

3. Canal selon l'une des revendications 1 et 2, comprenant en outre un interrupteur (10) relié entre ladite au moins deuxième machine électrique tournante (5) polyphasée et un point de connexion (7) reliant ladite première machine électrique asynchrone (4) polyphasée à double alimentation et le module (6), le module (6) de pilotage et de stockage étant en outre configuré pour piloter la première machine électrique tournante synchrone (9) polyphasée à aimant permanent.

4. Canal selon l'une quelconques des revendications 1 à 3, dans lequel le module (6) de pilotage et de stockage comprend un premier convertisseur (11) de puissance électrique réversible configuré pour piloter ladite première machine électrique tournante asynchrone(4) polyphasée à double alimentation, un deuxième convertisseur (12) de puissance électrique réversible relié au premier convertisseur de puissance et au point de connexion (7), le deuxième convertisseur étant configuré pour alimenter la première machine électrique tournante asynchrone (4) polyphasée à double alimentation et la machine électrique tournante synchrone (9) polyphasée à aimant permanent, ledit module comprenant en outre une unité de stockage (13) d'énergie électrique reliée entre le premier convertisseur de puissance électrique et le deuxième convertisseur de puissance électrique, le module (6) étant en outre configuré pour stocker de l'énergie électrique dans l'unité de stockage.

5. Canal selon la revendication 4, dans lequel les premier et deuxième convertisseurs (11, 12) de puissance électrique réversible sont configurés pour transférer 30% de la puissance nominale générée par la machine électrique tournante asynchrone (4) polyphasée à double alimentation.

6. Canal selon l'une des revendications 4 et 5, dans lequel le deuxième convertisseur (12) de puissance électrique réversible est en outre configuré pour transférer une puissance électrique générée par la machine électrique tournante synchrone (9) polyphasée à aimant permanent vers l'unité de stockage (13).

7. Canal selon l'une des revendications 4 à 6, comprenant en outre une deuxième machine électrique tournante synchrone (14) à aimant permanent reliée mécaniquement entre la turbomachine (3) et la première machine électrique tournante asynchrone (4) polyphasée à double alimentation, le module (6) de pilotage et de stockage comprenant en outre un troisième convertisseur (15) de puissance électrique relié à la deuxième machine électrique tournante synchrone (14) à aimant permanent et à l'unité de stockage (13) d'énergie électrique, le troisième convertisseur de puissance électrique étant configuré pour transférer une puissance électrique générée par la deuxième machine électrique synchrone à aimant permanent vers l'unité de stockage et le premier convertisseur de puissance.

8. Canal selon l'une des revendications 4 à 7, comprenant en outre une troisième machine électrique tournante synchrone (16) polyphasée à aimant permanent et un quatrième convertisseur (17) de puissance électrique réversible relié à ladite troisième machine électrique tournante synchrone et relié entre le premier convertisseur (11) de puissance électrique et le deuxième convertisseur (12) de puissance électrique.

9. Aéronef (1) comprenant le canal de propulsion selon l'une des revendications 1 à 8, et une turbomachine (3) configurée pour entraîner la première machine électrique tournante asynchrone (4) polyphasée à double alimentation.

10. Aéronef selon la revendication 9, comprenant en outre un deuxième canal de propulsion (19) d'architecture identique au canal de propulsion (2), la turbomachine (3) étant configurée pour entraîner les canaux de propulsion.

## Patentansprüche

1. Antriebskanal (2, 19) für ein Luftfahrzeug (1), umfassend: - mindestens eine erste mehrphasige, asynchrone, doppelt gespeiste, rotierende elektrische Maschine (4), die dazu bestimmt ist, mechanisch mit einer Turbomaschine (3) gekoppelt zu sein,
- mindestens eine zweite mehrphasige, rotierende elektrische Maschine (5), die elektrisch mit der ersten asynchronen, rotierenden elektrischen Maschine gekoppelt ist, und
- ein Steuer- und Speichermodul (6), das so konfiguriert ist, dass es die erste mehrphasige, asynchrone, doppelt gespeiste, rotierende elektrische Maschine (4) steuert,
wobei das Modul einerseits mit der ersten mehrphasigen, asynchronen, doppelt gespeisten, rotierenden elektrischen Maschine und andererseits mit der mindestens zweiten mehrphasigen, rotierenden elektrischen Maschine verbunden ist, wobei die mindestens zweite mehrphasige, rotierende elektrische Maschine eine mehrphasige, synchrone, rotierende elektrische Maschine (9) mit Permanentmagnet umfasst, **dadurch gekennzeichnet, dass** ein Stator der ersten mehrphasigen, asynchronen, doppelt gespeisten, rotierenden elektrischen Maschine eine erste Statorwicklung, die die elektrische Leistung erzeugt, die die zweite mehrphasige, rotierende elektrische Maschine (5) speist, und eine separate zweite Statorwicklung umfasst, die mit dem Steuer- und Speichermodul (6) zum Magnetisieren und Steuern des magnetischen Flusses eines Rotors der ersten mehrphasigen, asynchronen, doppelt gespeisten, rotierenden elektrischen Maschine verbunden ist, um die Frequenz und die Amplitude des elektrischen Leistungssignals zu steuern, das von der ersten rotierenden elektrischen Maschine stammt.

2. Kanal nach Anspruch 1, wobei die mehrphasige, asynchrone, doppelt gespeiste, rotierende elektrische Maschine (4) bürstenlos ist.

3. Kanal nach einem der Ansprüche 1 und 2, ferner umfassend einen Schalter (10), der zwischen der mindestens zweiten mehrphasigen, rotierenden elektrischen Maschine (5) und einem Anschlusspunkt (7) verbunden ist, der die erste mehrphasige, asynchrone, doppelt gespeiste elektrische Maschine (4) und das Modul (6) verbindet, wobei das Steuer- und Speichermodul (6) ferner so konfiguriert ist, dass es die erste mehrphasige, synchrone, rotierende elektrische Maschine (9) mit Permanentmagnet steuert.

4. Kanal nach einem der Ansprüche 1 bis 3, wobei das Steuer- und Speichermodul (6) einen ersten reversiblen elektrischen Leistungswandler (11), der so konfiguriert ist, dass er die erste mehrphasige, asynchrone, doppelt gespeiste, rotierende elektrische Maschine (4) steuert, und einen zweiten reversiblen elektrischen Leistungswandler (12) umfasst, der mit dem ersten Leistungswandler und dem Anschlusspunkt (7) verbunden ist, wobei der zweite Leistungswandler so konfiguriert ist, dass er die erste mehrphasige, asynchrone, doppelt gespeiste, rotierende elektrische Maschine (4) und die mehrphasige, synchrone, rotierende elektrische Maschine (9) mit Permanentmagnet speist, wobei das Modul ferner eine elektrische Energiespeichereinheit (13) umfasst, die zwischen dem ersten elektrischen Leistungswandler und dem zweiten elektrischen Leistungswandler verbunden ist, wobei das Modul (6) ferner so konfiguriert ist, dass es elektrische Energie in der Speichereinheit speichert.

5. Kanal nach Anspruch 4, wobei der erste und der zweite reversible elektrische Leistungswandler (11, 12) so konfiguriert sind, dass sie 30 % der von der mehrphasigen, asynchronen, doppelt gespeisten, rotierenden elektrischen Maschine (4) erzeugten Nennleistung übertragen.

6. Kanal nach einem der Ansprüche 4 und 5, wobei der zweite reversible elektrische Leistungswandler (12) ferner so konfiguriert ist, dass er eine von der mehrphasigen, synchronen, rotierenden elektrischen Maschine (9) mit Permanentmagnet erzeugte elektrische Leistung an die Speichereinheit (13) überträgt.

7. Kanal nach einem der Ansprüche 4 bis 6, ferner umfassend eine zweite synchrone, rotierende elektrische Maschine (14) mit Permanentmagnet, die mechanisch zwischen der Turbomaschine (3) und der ersten mehrphasigen, asynchronen, doppelt gespeisten, rotierenden elektrischen Maschine (4) verbunden ist, wobei das Steuer- und Speichermodul (6) ferner einen dritten elektrischen Leistungswandler (15) umfasst, der mit der zweiten synchronen, rotierenden elektrischen Maschine (14) mit Permanentmagnet und der elektrischen Energiespeichereinheit (13) verbunden ist, wobei der dritte elektrische Leistungswandler so konfiguriert ist, dass er eine von der zweiten elektrischen, synchronen Maschine mit Permanentmagnet erzeugte elektrische Leistung an die Speichereinheit und den ersten Leistungswandler überträgt.

8. Kanal nach einem der Ansprüche 4 bis 7, ferner umfassend eine dritte mehrphasige, synchrone, rotierende elektrische Maschine (16) mit Permanentmagnet und einen vierten reversiblen elektrischen Leistungswandler (17), der mit der dritten synchronen, rotierenden elektrischen Maschine verbunden ist und zwischen dem ersten elektrischen Leistungswandler (11) und dem zweiten elektrischen Leistungswandler (12) verbunden ist.

9. Luftfahrzeug (1), umfassend den Antriebskanal nach einem der Ansprüche 1 bis 8 und eine Turbomaschine (3), die so konfiguriert ist, dass sie die erste mehrphasige, asynchrone, doppelt gespeiste, rotierende elektrische Maschine (4) antreibt.

10. Luftfahrzeug nach Anspruch 9, ferner umfassend einen zweiten Antriebskanal (19) mit identischer Architektur wie der Antriebskanal (2), wobei die Turbomaschine (3) so konfiguriert ist, dass sie die Antriebskanäle antreibt.

## Claims

1. A propulsion channel (2, 19) for an aircraft (1) comprising:
- at least a first doubly-fed polyphase asynchronous rotating electric machine (4) to be mechanically coupled to a turbomachine (3),
- at least a second polyphase rotating electric machine (5) electrically coupled to the first asynchronous rotating electric machine, and
- a pilot and storage module (6) configured to pilot the first doubly-fed polyphase asynchronous rotating electric machine (4),
said module being connected, on the one hand, to the first doubly-fed polyphase asynchronous rotating electric machine and, on the other hand, to said at least second polyphase rotating electric machine, said at least second polyphase rotating electric machine comprising a permanent magnet polyphase synchronous rotating electric machine (9), **characterized in that** a stator of the first asynchronous rotating electric machine (4) comprises a first stator winding generating the electric power feeding the second rotating electric machine (5) and a second distinct stator winding connected to the module (6) for magnetising and piloting the magnetic flux of a rotor of the first doubly-fed polyphase asynchronous rotating electric machine (4) so as to control frequency and amplitude of the electric power signal from the first rotating electric machine (4).

2. The channel according to claim 1, wherein the doubly-fed polyphase asynchronous rotating electric machine (4) is of the brushless type.

3. The channel according to one of claims 1 and 2, further comprising a switch (10) connected between said at least second polyphase rotating electric machine (5) and a connection point (7) connecting said first doubly-fed polyphase asynchronous electric machine (4) and the module (6), the pilot and storage module (6) being further configured to pilot the first permanent magnet polyphase synchronous rotating electric machine (9).

4. The channel according to any of claims 1 to 3, wherein the pilot and storage module (6) comprises a first reversible electric power converter (11) configured to pilot said first doubly-fed polyphase asynchronous rotating electric machine (4), a second reversible electric power converter (12) connected to the first power converter and to the connection point (7), the second converter being configured to feed the first doubly-fed polyphase asynchronous rotating electric machine (4) and the permanent magnet polyphase synchronous rotating electric machine (9), said module further comprising an electric energy storage unit (13) connected between the first electric power converter and the second electric power converter, the module (6) being further configured to store electric energy in the storage unit.

5. The channel according to claim 4, wherein the first and second reversible electric power converters (11, 12) are configured to transfer 30% of the rated power generated by the doubly-fed polyphase asynchronous rotating electric machine (4).

6. The channel according to one of claims 4 and 5, wherein the second reversible electric power converter (12) is further configured to transfer electric power generated by the permanent magnet polyphase synchronous rotating electric machine (9) to the storage unit (13).

7. The channel according to one of claims 4 to 6, further comprising a second permanent magnet synchronous rotating electric machine (14) mechanically connected between the turbomachine (3) and the first doubly-fed polyphase asynchronous rotating electric machine (4), the pilot and storage module (6) further comprising a third electric power converter (15) connected to the second permanent magnet synchronous rotating electric machine (14) and to the electric energy storage unit (13), the third electric power converter being configured to transfer electric power generated by the second permanent magnet synchronous electric machine to the storage unit and the first power converter.

8. The channel according to one of claims 4 to 7, further comprising a third permanent magnet polyphase synchronous rotating electric machine (16) and a fourth reversible electric power converter (17) connected to said third synchronous rotating electric machine and connected between the first electric power converter (11) and the second electric power converter (12).

9. An aircraft (1) comprising the propulsion channel according to one of claims 1 to 8, and a turbomachine (3) configured to drive the first doubly-fed polyphase asynchronous rotating electric machine (4).

10. The aircraft according to claim 9, further comprising a second propulsion channel (19) of identical architecture to the propulsion channel (2), the turbomachine (3) being configured to drive the propulsion channels.
